# EUROPEAN PATENT APPLICATION

(11) **EP 4 717 383 A1**
(43) Date of publication of application: **01.04.2026**
(21) Application number: 24203564.0
(22) Date of filing: 30.09.2024
(51) Int. Cl.: B23B 51/00, B23B 51/02

(54) **CUTTING INSERT, SUPPORT BODY AND ROTARY DRILL TOOL HAVING SUCH CUTTING INSERT AND SUPPORT BODY**

(71) Applicant: AB Sandvik Coromant, 811 81 Sandviken (SE)
(72) Inventor: Svensson, André, 811 81 Sandviken (SE); Harström, Patrik, 811 81 Sandviken (SE)
(74) Representative: Sandvik

(57) **Abstract**

A cutting insert (10) of a rotary drill tool (1) for cutting metal comprises a head (14) and a neck extending along a longitudinal axis (12). The head has an axially forward-facing cutting region (13). At least the neck is configured for enabling releasably mounting at a support body (11). The head is formed by at least two lobes (33) each having a radially outermost envelope surface (23). Each lobe comprises a radially and axially extending torque transfer surface (17) configured for abutment contact with a corresponding torque transfer surface(29) of the support body. In a plane extending perpendicular to the longitudinal axis, the torque transfer surface has an orientation relative to the radial direction (R_{T}) at an angle (α) in the range 15 to 45°, or 22 to 35°, or 28 to 33°, or 28 to 29°.

A corresponding support body and a rotary drill tool.

## Description

### TECHNICAL FIELD

The present technology relates in general to cutting tools and particular to rotary drill tools having cutting inserts.

### BACKGROUND

Multi-component drilling tool assemblies have been developed in which an insert formed from a hard expensive material (such as a cemented carbide, ceramic or the like) is releasably axially and radially locked at a tool or carrier body formed from a lower hardness and less expensive material. The insert is typically regarded as a wear part and is provided with an axially forward-facing cutting region that typically includes a series of cutting edges and cutting surfaces.

Control and management of the transmission of axial loading forces and torque from the insert to the drill body is required to securely mount the insert during use whilst enabling insert replacement once worn. Bayonet-type locking interfaces have been developed in an attempt to appropriately transfer such loading forces.

The published European Patent Application EP 3 427 877 A1 discloses a cutting insert for a rotary drill tool and drill tool assembly in which an insert and a support body are coupled via a plurality of axial support surfaces. The support surfaces comprise a first declined orientation in the axial direction and a second declined orientation in the circumferential direction so as to manage and control transmission of loading forces at the region of mounting the insert at the support body. A torque transfer surface of the support body is oriented relative the radius of the head at an angle within -45° to 60°.

The design of the rotary drill tool of EP 3 427 877 A1 is generally well operating. However, in certain situations, existing drill tool assemblies have some minor disadvantages. The loading forces of the above arrangements encountered during use would typically induce stress and fatigue at the mounting region of the insert and the support body, leading to stress concentrations, cracks and failure of either the support body or the insert. Accordingly, what is required is an insert and drill tool assembly that addresses these problems.

### SUMMARY

It is an objective of the present invention to provide a cutting insert, a support body and drill tool assembly to control and manage transmission of torque loading forces during use so as to minimise stress and fatigue at regions of the support body and the cutting insert.

The objective is achieved by providing a cutting insert, a support body and a drill tool assembly having a tine-like interface between the cutting insert and tool body in which torque transfer surfaces appropriately direct transmission of torque and radial forces between the cutting insert and the tool body. In particular, it has been identified that by providing such torque transfer surfaces with a suitable orientation relative to a radial direction, fatigue and undesirable stress concentrations within the mounting regions of the assembly can be significantly reduced.

The above objective is achieved by methods and devices according to the independent claims. Preferred embodiments are defined in dependent claims. According to a first aspect of the present invention there is a cutting insert of a rotary drill tool for cutting metal comprising a head and a neck extending along a longitudinal axis. The head has an axially forward-facing cutting region and the neck has an axially rearward facing mount region. At least the neck is configured for enabling being releasably mountable within a jaw of a support body. The head is formed by at least two, around the longitudinal axis distributed, lobes each having a radially outermost envelope surface. Each of the lobes comprises a, from the radially outermost envelope surface, radially and axially extending torque transfer surface configured for abutment contact with a corresponding torque transfer surface of the support body. In a plane extending perpendicular to the longitudinal axis, the torque transfer surface of the cutting insert has an orientation relative to the radial direction at an angle in the range 20 to 45°. Preferably, the angle is in the range of 27 to 37°, more preferably in the range of 30 to 35°, and most preferably in the range of 32 to 33°. The radial direction is defined as the direction from a radially outer edge of the torque transfer surface to the longitudinal axis.

According to a second aspect of the present invention there is a support body of a rotary drill tool for cutting metal, extending along a longitudinal axis, comprising at an axially forward end, at least two axially extending arms. The arms are spaced apart about the longitudinal axis so as to define a jaw configured for enabling releasably mounting of a cutting insert. Each arm has a radially and axially extending torque transfer surface configured for abutment contact with a corresponding torque transfer surface of the cutting insert. In a plane extending perpendicular to the longitudinal axis, the torque transfer surface of the support body has an orientation relative to the radial direction at an angle in the range 20 to 45°. The radial direction R_{T} is defined as the direction from a radially outer edge 75 of the torque transfer surface 29 to the longitudinal axis 12. Preferably, the angle is in the range of 27 to 37°, more preferably in the range of 30 to 35°, and most preferably in the range of 32 to 33°.

According to a third aspect of the present invention there is a rotary drill tool for cutting metal comprising a support body according to the second aspect and a cutting insert according to the first aspect.

One advantage with the proposed technology is that stress and fatigue at regions of the support body and the cutting insert is significantly reduced. Other advantages will be appreciated when reading the detailed description.

### BRIEF DESCRIPTION OF THE DRAWINGS

A specific implementation of the present invention will now be described, by way of example only, and with reference to the accompanying drawings in which:
Figure 1 is a perspective view of a rotary drill tool assembly having an elongate support body releasably mounting at one axial end a cutting insert according to a specific implementation of the present invention;
Figure 2 is an exploded magnified view of the cutting insert positioned for mounting at the axial forward end of the support body of figure 1;
Figure 3 is a side elevation view of the cutting insert of figure 2;
Figure 4 is a further side view of the cutting insert of figure 3 rotated through 90° about its central longitudinal axis relative to the view of figure 2; and
Figure 5 is a plan view of a part of the cutting insert of figure 4.

### DETAILED DESCRIPTION

Throughout the drawings, the same reference numbers are used for similar or corresponding elements.

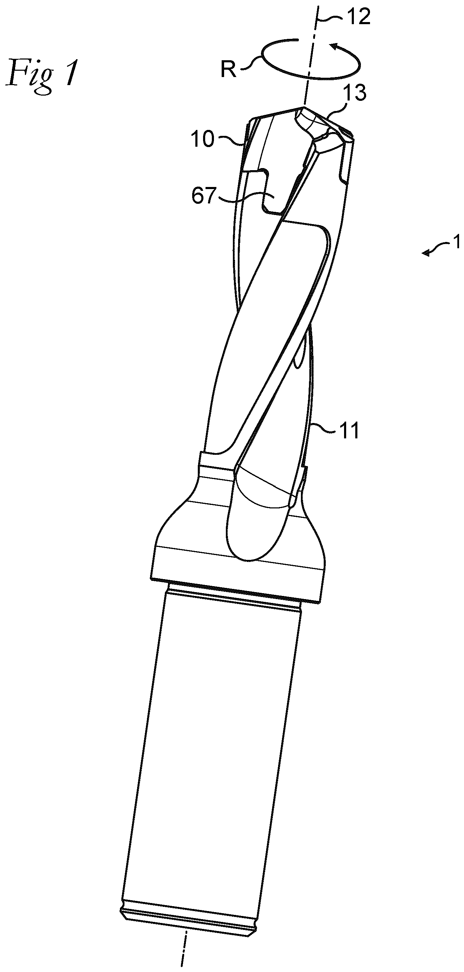

Figure 1 is a perspective view of a rotary drill tool assembly having an elongate support body. Referring to figure 1 a cutting tool, implemented as a rotary drill tool 1 for cutting metal, comprises an elongate support body 11. A cutting insert 10 is releasably mounted at an axially forward end of support body 11. The cutting insert 10 comprises an axially most forward, axially forward-facing cutting region 13 and an axially most rearward mount region 67. The mount region 67 and the axial forward end of the support body 11 are shaped complementary to one another both axially and radially as described in detail below so as to provide control and management of the transmission of loading forces between the cutting insert 10 and the support body 11 during use. Such loading forces include axial and radial forces in addition to torque resultant from the rotation of the cutting tool in direction R about a central longitudinal axis 12 extending though the insert 10 and the support body 11.

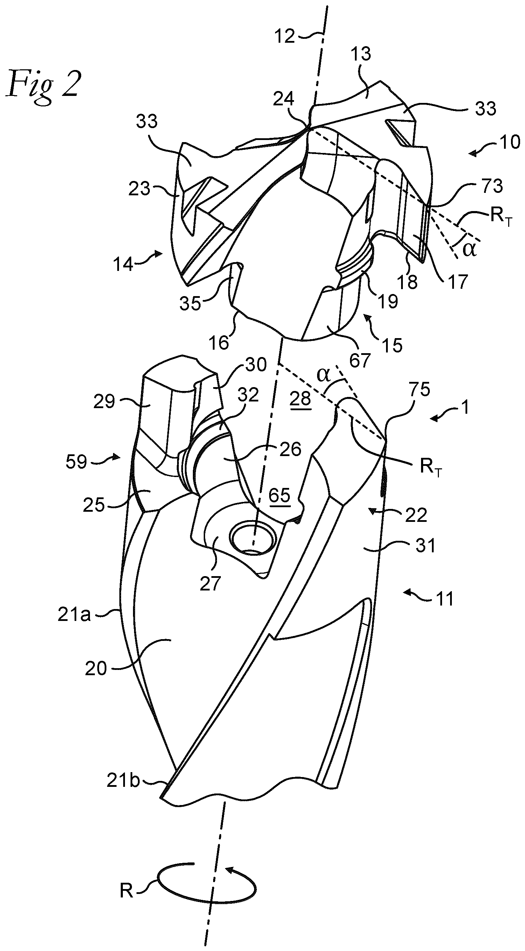

Figure 2 is an exploded magnified view of the cutting insert positioned for mounting at the axial forward end of the support body of figure 1. Referring to figure 2, the cutting insert 10 may be considered to comprise an axially forward head 14 being radially enlarged relative to a generally cylindrical central neck 15 from which the head 14 extends along the central longitudinal axis 12. The head 14 of the cutting insert 10 comprises the axially forward-facing cutting region 13. The head 14 is in this embodiment formed generally by at least two, and in this embodiment a pair of, diametrically opposed lobes 33 that project radially outward from the longitudinal axis 12 and the neck 15. In other embodiments, more than two lobes may be used, distributed around the longitudinal axis. The neck 15 comprises the axially rearward facing mount region 67. The axially forward-facing cutting region 13 extends over the lobes 33 and the inner central portion of the cutting insert 10 and is generally part conical (or domed) having a central axially forwardmost cutting tip 24 from which a series of cutting edges and corresponding cutting surfaces extend radially outward. Each of the lobes 33 are terminated at their axially rearward end by an undercut so as to present generally axially rearward facing axial support surfaces 18. Surfaces 18 project radially outward from an axially forward region of the central neck 15. Each lobe 33 further comprises a torque transfer surface 17 having a length extending axially and a width extending generally radially. The head 14 comprises radially outward facing envelope surfaces 23 formed at the radially outermost regions of the lobes 33, and the neck 15 comprises a corresponding radially outward facing generally cylindrical or slight conical surface 35. Each torque transfer surface 17 extends axially between the rearward facing axial support surfaces 18 and the forward-facing cutting region 13. Additionally, the torque transfer surfaces 17 are positioned so as to extend radially inward from a radial perimeter of the lobes 33. In other words, each of the lobes 33 comprise a, from the radially outermost envelope surface 23, radially and axially extending torque transfer surface 17. The torque transfer surface 17 is configured for abutment contact with a corresponding torque transfer surface 29 of the support body 11, see below. A projection 19 extends radially outward from an axially rearward portion of head 14 and in a circumferential direction between each of the lobes 33 as will be described in detail further below. Accordingly, the cutting insert 10 comprises two diametrically opposed radial projections 19. The neck 15 is terminated at its axially rearward end by a part circular planar base surface 16. At least the neck 15 is configured for enabling being releasably mountable within a jaw 28 of a support body 11, see below

The elongate support body 11 may in this embodiment be considered to comprise at least two, and in this embodiment a pair of, diametrically opposed elongate members that are twisted about axis 12 so as to extend along a helical path and define between them axially extending helical chip flutes 20 defined between an axially extending trailing edge 21a and a corresponding axially extending leading edge 21b relative to the rotational direction R. The support body 11, at its axially forward end, comprises a pair of axially extending retaining arms indicated generally by reference 22 spaced apart about the longitudinal axis 12 so as to be diametrically opposite one another. A jaw 28 is defined radially between arms 22 and is configured to enable releasably mounting of the neck 15 and lobes 33 of the cutting insert 10. In particular, radially inward facing surfaces of arms 22 define the jaw 28 with such surfaces including part cylindrical surfaces 26 that between them define a base cavity 65 to receive and releasably mount neck 15. The arms 22 also comprise radially inward facing locating surfaces 30, positioned towards the axial forwardmost ends of arms 22, for positioning opposed to/against radially inner surface regions of the head 14, i.e. between the lobes 33 in a circumferential direction. The inward facing surfaces 26 and 30 are separated axially by a channel 32 extending in a circumferential 25 direction around axis 12 along a full width of each arm 22, in the circumferential direction.

Each channel 32 is appropriately dimensioned so as to receive each respective projection 19 to axially lock the insert 10 at the support body 11 when mounted in position as illustrated in figure 1. The cavity 65 comprises a base surface 27 configured to be positioned opposed to the insert base surface 16. With the insert 10 mounted in position at the support body 11 as illustrated in figure 1, the insert envelope surfaces 23 are aligned to be positioned generally coplanar with corresponding radially outward facing envelopes surfaces 31 of the support body 11.

Each arm 22 comprises a shoulder, indicated generally by reference 59, positioned axially at the same position as the channel 32 at the axial junction between arm inward facing surfaces 26 and 30. Each shoulder 59 presents an axially forward-facing axial support surface 25 being dimensioned and aligned complimentary with the axial support surfaces 18 of insert 10. That is, with the insert 10 mounted in position at support body 11, as illustrated in figure 1, the insert and support body axial support surfaces 18, 25 are configured to abut each another and provide transmission of axial forces between the insert 10 and the support body 11. Each shoulder 59 also comprises a respective torque transmission surface 29 being dimensioned and aligned so as to be complementary with the insert torque transmission surfaces 17 to provide transmission of torque forces from the support body 11 to the insert 10 during rotation R about the axis 12. In other words, each arm 2) has a radially and axially extending torque transfer surface 29 configured for abutment contact with a corresponding torque transfer surface 17 of the cutting insert 10.

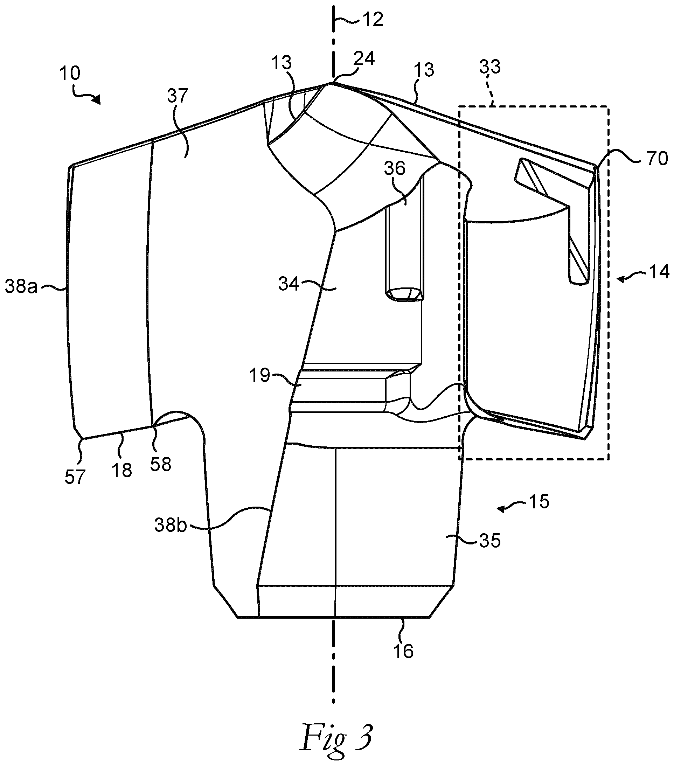

Figure 3 is a side elevation view of the cutting insert of figure 2. Referring to figure 3, the head lobes 33 are, in part, defined and separated in a circumferential direction by a concaved curved surface 37 recessed radially into the head 14 and the neck 15. The concave surface 37 is in the circumferential direction defined at one end by a trailing edge 38a and at the opposite end by leading edge 38b. The insert 10 comprises in this embodiment two diametrically opposite concave surfaces 37 and corresponding pairs of edges 38a, 38b. The concave surfaces 37 extend the at least almost complete axial height of the insert 10 between the base surface 16 and the cutting region 13. The concave surface 37 is dimensioned and orientated so as to form axial extensions of chip flutes from the support body. In the circumferential direction, the edge 38b of the chip flute defines one axial extending lengthwise side of a locating surface 34 that extends in a short circumferential distance between a trailing end of each lobe 33 and the concave surface 37 of the chip flute. The radial projection 19 is positioned at a trailing lengthwise end of the locating surface 34 and extends also in a circumferential direction between the trailing end of each lobe 33 and the edge 38b. An axially forward end of the locating surface 34 terminates at the forward-facing cutting region 13 with each locating surface 34 being generally part cylindrical and having a similar radius to the cylindrical neck surface 35, relative to the common axis 12.

A second radial projection 36 extends radially outward from an axially forward half of the locating surface 34. The second radial projection 36 is, in a circumferential direction, positioned closer to the trailing end of each lobe 33 relative to the concave surface edge 38b. Additionally, the second projection 36 is axially separated from the projection 19. As illustrated in figure 3, the projection 19 may be considered to be formed as a rib, ridge or shelf having a length extending in the circumferential direction, a width extending in the axial direction and a depth extending in the radial direction, relative to locating surface 34. In contrast, the second projection 36 comprises a radial depth typically being less than 10% of the corresponding radial depth of the projection 19, relative to locating surface 34. The second projection 36 has a length extending in the axial direction being approximately equal to an axial forward half of the locating surface 34. As such, the second projection 36 may be regarded as a raised bump projecting from the locating surface 34.

Each head lobe 33 is defined at its axially rearward end by a rearward facing axial support surface 18. Each axial support surface 18 may be considered to be declined at an angle relative to a plane, aligned perpendicular to the axis 12. This declining is such that a radially outer end region of the surface 18 is positioned axially rearward relative to a radially inner end region.

The forward-facing cutting region 13 of the lobes 33 terminates in the radially outwards direction by a cutting region leading corner 70.

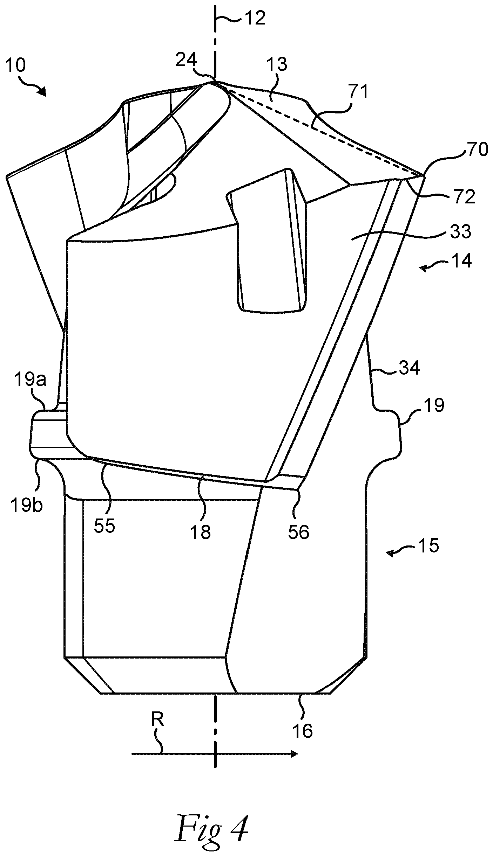

Figure 4 is a further side view of the cutting insert of figure 3 rotated through 90° about its central longitudinal axis relative to the view of figure 2. As illustrated in figure 4, each axial support surface 18 comprises a second declined orientation extending in a circumferential direction and rotational direction R. Relative to the axially perpendicular plane, each surface 18 is declined in the circumferential direction such that a leading lengthwise end region 56 of surface 18 is positioned axially rearward relative to a trailing lengthwise end region 55 with respect to the rotational direction R.

Furthermore, in Figure 4, it is seen that the respective forward-facing cutting region 13 of lobes 33 are inclining along a reference line 71. The reference line 71 extends between the cutting region leading corner 70 and the longitudinal axis 12. The cutting region leading corner 70 is thus a leading point, in a rotation direction R, of a forward edge 72 of the radially outermost envelope surface 23.

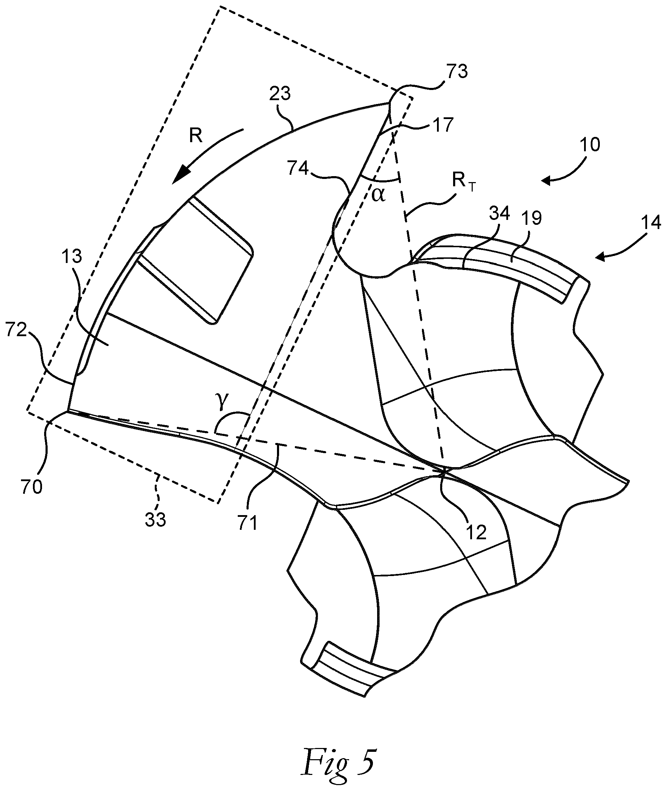

Figure 5 is a plan view of a part of the cutting insert of figure 4. Referring to figure 5 and Figure 2, each lobe torque transfer surface 17 is positioned in the rotational direction R at the trailing end of each lobe 33. The lobe torque transfer surface 17 is thus to be abutted by the corresponding support body torque transfer surface 29 of each respective arm 22 to allow transmission of the rotational drive from the body 11 to the insert 10. In this embodiment, each torque transfer surface 17, 29 has a length extending in the axial direction that is larger than a corresponding width extending in the radial direction. In this embodiment, each torque transfer surface 17, 29 is generally rectangular.

A radial direction R_{T} can be defined in a plane extending perpendicular to the longitudinal axis 12, i.e. in the plane of figure 5. In the plane extending perpendicular to the longitudinal axis 12, each insert torque transfer surface 17 is orientated to be transverse to the radial direction R_{T} of the head 14. In particular, each torque transfer surface 17 extends at an acute angle α relative to the radial direction R_{T}, where the acute angle α is in a range of 15 to 45°. In other words, the torque transfer surface 17 of the cutting insert 10 has an orientation relative to the radial direction R_{T} at an angle α in the range of 15 to 45°. A radially inner end 74 of the torque transfer surface 17 is thereby provided in front of a radially outer edge 73 of the torque transfer surface 17 as viewed in the direction of the intended rotation direction R, i.e. facing slight inwards to the longitudinal axis 12. The radial direction R_{T} is defined as the direction from a radially outer edge 73 of the torque transfer surface 17 to the longitudinal axis 12.

The support body 11 is configured in an analogue manner. In a plane extending perpendicular to the longitudinal axis 12, the torque transfer surface 29 of the support body 11 has an orientation relative to the radial direction R_{T} at an angle α in the range 15 to 45°. Also here, a radially inner end of the torque transfer surface 29 of the support body 11 is provided in front of a radially outer edge of the torque transfer surface 29 of the support body 11 as viewed in the direction of the intended rotation direction R, i.e. facing slight outwards from the longitudinal axis 12. The radial direction R_{T} is in connection with the support body defined as the direction from a radially outer edge 75 (Fig. 2) of the torque transfer surface 29 to the longitudinal axis 12.

During operation, a contact plane between the torque transfer surface 17 of the cutting insert 10 and the torque transfer surface 29 of the support body 11 is responsible for the transfer of forces in the rotational direction between the support body 11 and the cutting insert 10. Due to the orientation of the contact plane, the torque transfer surface 17 cutting insert 10 will exert a force onto the arm 22 with an inwards directed force component. This inwards directed force component ensures a firm connection between the support body 11 and the cutting insert 10 and compensates for tendencies of the arm 22 to be bent outwards. The inwards directed force component thus serves for reducing the strain in the arms 22, which reduces the risks for breaches.

However, at the same time, the torque transfer surface 29 of the support body 11 exerts a force onto the cutting insert 10 directed outwards. This outwards directed force will unfortunately increase the strain at the outer part of the lobes 33, in particular in the parts between the envelope surface 23 and the torque transfer surface 17. This force thus has to be low enough, not to risk any breaching.

There has thus to be a compromise between the stabilizing action on the arms 22 and the strain level in the cutting insert 10. It has been found that maintaining the angle α in the range of 15 to 45°, both objectives are typically met. A more preferred range for the angle α is in the range of 22 to 35°, even more preferred in the range of 28 to 33°, and most preferred in the range of 28 to 29°. These preferred ranges are of course valid for both the cutting insert 10 and the support body 11.

Another aspect that influences the strength of the cutting insert 10 is the relation between forward-facing cutting region 13 and the position where the cutting force is applied to the cutting insert 10, i.e. the torque transfer surface 17. The cutting interaction between the forward-facing cutting region 13 and a work-piece creates strain fields within the lobes 33. These strain fields may influence the strain level as caused by the torque transfer surface 17.

It has thus been found that there are preferred relations between the direction of the torque transfer surface 17 and the configuration of the forward-facing cutting region 13. As mentioned above, the reference line 71 extends between the cutting region leading corner 70 and the longitudinal axis 12, where the cutting region leading corner 70 is a leading point, in a rotation direction R, of a forward edge 72 of the radially outermost envelope surface 23. In a preferred embodiment, the reference line 71 has an angle γ with respect to the orientation of the torque transfer surface 17 in the range of 80 to 150°. In further preferred embodiments, the angle γ is within the range of 90 to 140°, more preferably within the range of 100 to 130°, and most preferably within the range of 110 to 120°.

In one embodiment, the torque transfer surface 17 of the cutting insert 10 and the torque transfer surface 29 of the support body 11 are planar, giving a large contact surface therebetween during operation. In other words, the torque transfer surface 17 of the cutting insert 10 is plane as seen in the plane extending perpendicular to the longitudinal axis 12 and extending across the torque transfer surface 17. Analogously, the torque transfer surface 29 of the support body 11 is plane as seen in the plane extending perpendicular to the longitudinal axis 12 and extending across the torque transfer surface 29.

However, the contact between the torque transfer surface 17 of the cutting insert 10 and the torque transfer surface 29 of the support body 11 may give rise to small deformations of one or both of the torque transfer surfaces 17, 29. Such deformation may influence the area over which the operation forces are applied. In one embodiment, the torque transfer surface 17 of the cutting insert 10 and the torque transfer surface 29 of the support body 11 are therefore produced as having mildly convex surfaces when being non-loaded. This ensures that the centre of the contact between the torque transfer surface 17 of the cutting insert 10 and the torque transfer surface 29 of the support body 11 is positioned close to a centre of the respective torque transfer surface 17, 29. In other words, the torque transfer surface 17 of the cutting insert 10 is convex as seen in the plane extending perpendicular to the longitudinal axis 12 and extending across the torque transfer surface 17. Likewise, the torque transfer surface 29 of the support body 11 is convex as seen in the plane extending perpendicular to the longitudinal axis 12 and extending across the torque transfer surface 29. However, the convexity is extremely small and the difference from a perfectly plane surface is typically in the range of 5-50 pm.

Further embodiments are possible where one of the torque transfer surface 17 of the cutting insert 10 and the torque transfer surface 29 of the support body 11 is plane and the other is convex.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A cutting insert (10) of a rotary drill tool (1) for cutting metal comprising:
a head (14) and a neck (15) extending along a longitudinal axis (12), the head (14) having an axially forward-facing cutting region (13) and the neck (15) having an axially rearward facing mount region (67), at least the neck (15) being configured for enabling being releasably mountable within a jaw (28) of a support body (11);
the head (14) is formed by at least two, around the longitudinal axis distributed, lobes (33) each having a radially outermost envelope surface (23);
wherein each of the lobes (33) comprise a, from the radially outermost envelope surface (23), radially and axially extending torque transfer surface (17) configured for abutment contact with a corresponding torque transfer surface (29) of the support body (11);
**characterised in that:**
in a plane extending perpendicular to the longitudinal axis (12), the torque transfer surface (17) of the cutting insert (10) has an orientation relative to a radial direction (R_{T}) at an angle (α) in the range 15 to 45°, 22 to 35°, 28 to 33°, or 28 to 29°, wherein in said radial direction (R_{T}) is defined as the direction from a radially outer edge (73) of the torque transfer surface (17) to the longitudinal axis (12).

2. The cutting insert according to claim 1, **characterised in that** a reference line (71) extending between a cutting region leading corner (70) and the longitudinal axis (12) at the forward-facing cutting region (13) of the lobes (33) has an angle (γ) with respect to the orientation of the torque transfer surface (17) in the range of 80 to 150°, 90 to 140°, 100 to 130°, or 110 to 120°, where the cutting region leading corner (70) is a leading point, in a rotation direction (R), of a forward edge (72) of the radially outermost envelope surface (23).

3. The cutting insert according to claim 1 or 2, **characterised in that** the torque transfer surface (17) of the cutting insert (10) is convex as seen in the plane extending perpendicular to the longitudinal axis (12) and extending across the torque transfer surface (17).

4. The cutting insert according to claim 1 or 2, **characterised in that** the torque transfer surface (17) of the cutting insert (10) is plane as seen in the plane extending perpendicular to the longitudinal axis (12) and extending across the torque transfer surface (17).

5. A support body (11) of a rotary drill tool (1) for cutting metal, extending along a longitudinal axis (12), comprising:
at an axially forward end, at least two axially extending arms (22);
wherein the arms (22) are spaced apart about the longitudinal axis (12) so as to define a jaw (28) configured for enabling releasably mounting of a cutting insert (10);
each arm (22) having a radially and axially extending torque transfer surface (29) configured for abutment contact with a corresponding torque transfer surface (17) of the cutting insert (10);
**characterised in that:**
in a plane extending perpendicular to the longitudinal axis (12), the torque transfer surface (29) of the support body (11) has an orientation relative to the radial direction at an angle (α) in the range 15 to 45°, 22 to 35°, 28 to 33°, or 28 to 29°, wherein in said radial direction (R_{T}) is defined as the direction from a radially outer edge (75) of the torque transfer surface (29) to the longitudinal axis (12).

6. The support body according to claim 5, **characterised in that** the torque transfer surface (29) of the support body (11) is convex as seen in the plane extending perpendicular to the longitudinal axis (12) and extending across the torque transfer surface (29).

7. The support body according to claim 5, **characterised in that** the torque transfer surface (29) of the support body (11) is plane as seen in the plane extending perpendicular to the longitudinal axis (12) and extending across the torque transfer surface (29).

8. A rotary drill tool (1) for cutting metal comprising:
a support body according to any of the claims 5 to 7; and
a cutting insert according to any of the claims 1 to 4.
